# EUROPÄISCHE PATENTANMELDUNG

(11) **EP 1 460 303 A1**
(43) Veröffentlichungstag der Anmeldung: **22.09.2004**
(21) Anmeldenummer: 04006145.9
(22) Anmeldetag: 16.03.2004
(51) Int. Cl.: F16F 15/123

(54) **Torsionsschwingungsdämpfer**

(30) Priorität: 20.03.2003 DE 10312477
(71) Anmelder: ZF Sachs AG, 97424 Schweinfurt (DE)
(72) Erfinder: Ament, Norbert, 97714 Oerlenbach (DE)

(57) **Zusammenfassung**

Ein Torsionsschwingungsdämpfer umfasst ein Nabenelement (16), ein mit dem Nabenelement (16) drehfestes erstes Übertragungselement (28), ein zweites Übertragungselement (32), das mit dem ersten Übertragungselement (16) über eine erste Dämpferelementenanordnung (40) gekoppelt ist, ein drittes Übertragungselement (42), das mit dem zweiten Übertragungselement (32) über eine zweite Dämpferelementenanordnung (50) gekoppelt ist, eine erste Abstützanordnung (52), über welche das dritte Übertragungselement (42) bezüglich des Nabenelements (16) in einer ersten axialen Richtung (R₁) abgestützt ist, eine zweite Abstützanordnung (58 60, 62), über welche das dritte Übertragungselement (42) bezüglich des zweiten Übertragungselements (32) zumindest in einer der ersten axialen Richtung (R₁) entgegengesetzten zweiten axialen Richtung (R₂) abgestützt ist. Weiter ist vorgesehen, dass das erste Übertragungselement (28) bezüglich des Nabenelements (16) zumindest in der zweiten axialen Richtung (R₂) axial abgestützt ist und dass das zweite Übertragungselement (32) durch eine dritte Abstützanordnung (64, 66) bezüglich des ersten Übertragungselements (28) zumindest in der zweiten axialen Richtung (R₂) abgestützt ist.

## Beschreibung

Die vorliegende Erfindung betrifft einen Torsionsschwingungsdämpfer, umfassend ein Nabenelement, ein mit dem Nabenelement drehfestes erstes Übertragungselement, ein zweites Übertragungselement, das mit dem ersten Übertragungselement über eine erste Dämpferelementenanordnung gekoppelt ist, ein drittes Übertragungselement, das mit dem zweiten Übertragungselement über eine zweite Dämpferelementenanordnung gekoppelt ist, eine erste Abstützanordnung, über welche das dritte Übertragungselement bezüglich des Nabenelements in einer ersten axialen Richtung abgestützt ist, sowie eine zweite Abstützanordnung, über welche das dritte Übertragungselement bezüglich des zweiten Übertragungselements zumindest in einer der ersten axialen Richtung entgegengesetzten zweiten axialen Richtung abgestützt ist.

Aus der DE 198 17 014 A1 ist ein in einer Kupplungsscheibe einer Kraftfahrzeugreibungskupplung vorgesehener Torsionsschwingungsdämpfer bekannt, bei welchem ein Nabenelement mit grundsätzlich ringartiger Ausgestaltung an einer Innenumfangsseite eine Keilverzahnung zur drehfesten Kopplung mit einer Getriebeeingangswelle oder dergleichen aufweist. Eine an einer Außenseite dieser Nabenscheibe vorgesehene Außenverzahnung steht in Kämmeingriff mit einem scheibenartig ausgebildeten ersten Übertragungselement. Dieses scheibenartige erste Übertragungselement ist somit im Wesentlichen drehfest mit dem Nabenelement gekoppelt, grundsätzlich aber bezüglich diesem axial frei verlagerbar. Hierzu weist das erste Übertragungselement eine der Außenverzahnung des Nabenelements komplementäre Innenverzahnung auf. Ein zweites Übertragungselement, das aus zwei Scheibenteilen zusammengesetzt ist, liegt mit diesen beiden Scheibenteilen in seinem radial inneren Bereich beidseits des ersten Scheibenelements und steht über eine an diesen beiden Scheibenteilen vorgesehene Innenverzahnung ebenfalls in Kämmeingriff mit der Außenverzahnung des Nabenelements. Hier ist jedoch keine drehfeste Kopplung vorgesehen, sondern ein eine vorbestimmte Umfangsrelativbewegung zwischen dem Nabenelement und den beiden Scheibenteilen, also dem zweiten Übertragungselement, zulassender Kämmeingriff. Zwischen dem ersten Übertragungselement und den beiden Scheibenteilen des zweiten Übertragungselements wirken Dämpferfedern, welche eine Relativumfangsbewegung zwischen dem ersten Übertragungselement und dem zweiten Übertragungselement unter Kompression derselben zulassen. Beidseits des zweiten Übertragungselements liegen zwei Scheibenteile eines dritten Übertragungselements. Diese beiden Scheibenteile des dritten Übertragungselements sind über weitere Dämpferfedern zur Drehmomentübertragung mit dem zweiten Übertragungselement gekoppelt, so dass eine Relativdrehbewegung zwischen dem dritten Übertragungselement und dem zweiten Übertragungselement unter Kompression dieser Federn möglich ist. Eines dieser Scheibenteile des dritten Übertragungselements trägt dann in seinem radial äußeren Bereich die Reibbeläge der Kupplungsscheibe.

Die beiden Scheibenteile des dritten Übertragungselements erstrecken sich so weit nach radial innen, dass das Nabenelement in demjenigen Bereich, in dem es auch die Außenverzahnung aufweist, zwischen diese beiden Scheibenteile des dritten Übertragungselements eingreift. Zwischen einem dieser Scheibenteile und dem Nabenelement wirkt eine Vorspannfeder, die das andere der Scheibenteile unter Zwischenanordnung eines als Lagerring ausgebildeten Abstützelements gegen das Nabenelement vorspannt. Auf diese Art und Weise ist das dritte Übertragungselement durch Abstützung bezüglich des Nabenelements in beiden axialen Richtungen bezüglich des Nabenelements zentriert. Zwischen dem dritten Übertragungselement, d.h. den beiden Scheibenteilen desselben, und dem zweiten Übertragungselement, d.h. den beiden Scheibenteilen desselben, wirkt eine Abstützanordnung, die dafür sorgt, dass auch das zweite Scheibenelement durch beidseitige axiale Abstützung bezüglich des dritten Scheibenelements in definierter Positionierung bezüglich des Nabenelements gehalten ist. Das erste Übertragungselement, das zwischen den radial inneren Bereichen der Scheibenteile des zweiten Übertragungselements liegt, ist in axialer Richtung lediglich dadurch in bestimmter Psoitionierung gehalten, dass es umfangsmäßig über die bereits angesprochenen Dämpferfedern mit dem zweiten Übertragungselement gekoppelt ist und somit eine Axialverlagerung des ersten Übertragungselements auf Grund der vorhandenen Reibkräfte zumindest erschwert ist.

Bei diesem zur Übertragung vergleichsweise großer Drehmomente geeigneten Torsionsschwingungsdämpfer ist die Axialabstützung zwischen dem die Reibbeläge tragenden dritten Übertragungselement, d.h. den beiden Scheibenteilen desselben, und dem Nabenelement an vergleichsweise weit axial auseinander liegenden Bereichen vorgesehen, nämlich den jeweiligen radial inneren Endbereichen dieser beiden Scheibenteile des dritten Übertragungselements. Somit ergibt sich eine vergleichsweise taumelsteife Konfiguration, welche es erschwert, Achsversätze bzw. Achsneigungen zwischen einer Antriebswelle und einer Abtriebswelle zu kompensieren. Ferner ist es erforderlich, beide Scheibenteile des dritten Übertragungselements nach radial innen bis an das Nabenelement heranzuführen, um die bereits angesprochene Axialabstützung realisieren zu können.

Es ist die Aufgabe der vorliegenden Erfindung, einen gattungsgemäßen Torsionsschwingungsdämpfer so weiterzubilden, dass er bei einer weniger Bauraum beanspruchenden Ausgestaltung die verbesserte Kompensation von Achsversätzen zulässt.

Erfindungsgemäß wird diese Aufgabe gelöst durch einen Torsionsschwingungsdämpfer, umfassend ein Nabenelement, ein mit dem Nabenelement drehfestes erstes Übertragungselement, ein zweites Übertragungselement, das mit dem ersten Übertragungselement über eine erste Dämpferelementenanordnung gekoppelt ist, ein drittes Übertragungselement, das mit dem zweiten Übertragungselement über eine zweite Dämpferelementenanordnung gekoppelt ist, eine erste Abstützanordnung, über welche das dritte Übertragungselement bezüglich des Nabenelements in einer ersten axialen Richtung abgestützt ist, eine zweite Abstützanordnung, über welche das dritte Übertragungselement bezüglich des zweiten Übertragungselements zumindest in einer der ersten axialen Richtung entgegengesetzten zweiten axialen Richtung abgestützt ist.

Dabei ist dann weiter vorgesehen, dass das erste Übertragungselement bezüglich des Nabenelements zumindest in der zweiten axialen Richtung axial abgestützt ist und dass das zweite Übertragungselement durch eine dritte Abstützanordnung bezüglich des ersten Übertragungselements zumindest in der zweiten axialen Richtung abgestützt ist.

Im Gegensatz zum Stand der Technik findet also die Axialabstützung des dritten Übertragungselements nicht nur durch dieses selbst statt, sondern unter Miteinbeziehung des zweiten bzw. auch des ersten Übertragungselements, so dass die beiden Stellen, an welchen die Axialabstützung bezüglich des Nabenelements erfolgt, einen geringeren Axialabstand aufweisen. Dies ermöglicht aber zum einen das leichtere Verkippen beispielsweise des dritten Übertragungselements bezüglich des Nabenelements, um Achsversätze kompensieren zu können, und macht es weiterhin nicht erforderlich, bei Aufbau des dritten Übertragungselements aus zwei Scheibenteilen beide Scheibenteile zur axialen Abstützung bis in den Bereich des Nabenelements radial innen zu führen. Der somit frei werdende Bauraum kann für andere Kupplungskomponenten genutzt werden, beispielsweise zum Eintauchen der Membranfederzungen oder eines Ausrücklagers beim Durchführen von Ein- bzw. Auskuppelvorgängen.

Um eine drehfeste Verbindung zwischen dem Nabenelement und dem ersten Übertragungselement erlangen zu können, wird vorgeschlagen, dass das Nabenelement eine Außenverzahnungsformation aufweist, dass das erste Übertragungselement eine erste Innenverzahnungsformation aufweist und dass die Außenverzahnungsformation und die Innenverzahnungsformation im Wesentlichen drehfest in Kämmeingriff stehen. Es sei hier darauf hingewiesen, dass im Sinne der vorliegenden Erfindung der Ausdruck "im Wesentlichen drehfest" zum Ausdruck bringen soll, dass eine völlig spielfreie Kopplung dieser beiden Bauteile auf Grund der zwangsweise erforderlichen Fertigungstoleranzen, die auch das axiale Aufeinanderaufschieben dieser beiden Bauteile ermöglicht, nicht vermieden werden kann, dass jedoch diese Toleranzen bzw. das dadurch eingeführte Bewegungsspiel, so klein wie möglich gehalten werden sollen.

Um das erste Übertragungselement in axialer Richtung definiert am Nabenelement halten zu können, wird vorgeschlagen, dass an dem Nabenelement ein das erste Übertragungselement gegen Bewegung in der zweiten axialen Richtung blockierender Anschlag vorgesehen ist. Hier ist es beispielsweise möglich, dass der Anschlag durch einen Radialübergang der Außenverzahnungsformation gebildet ist.

Die dritte Abstützanordnung kann eine zwischen dem ersten Übertragungselement und dem zweiten Übertragungselement wirkende Vorspannanordnung umfassen, wobei hier vorgesehen sein kann, dass die erste Vorspannanordnung ein bezüglich des ersten Übertragungselements und des zweiten Übertragungselements sich abstützendes Federelement umfasst.

Um bei einer derartigen Ausgestaltung definierte Reibverhältnisse bereitstellen zu können, welche für die Abfuhr von Schwingungsenergie sorgen können, wird weiter vorgeschlagen, dass das Federelement bezüglich des ersten Übertragungselements oder/und bezüglich des zweiten Übertragungselements über einen Abstützring abgestützt ist.

Allgemein kann also bei der erfindungsgemäßen Ausgestaltung eines Torsionsschwingungsdämpfers vorgesehen sein, dass die dritte Abstützanordnung wenigstens einen Teil einer zwischen dem ersten Übertragungselement und dem zweiten Übertragungselement wirkenden Reibeinrichtung bildet.

Insbesondere zur Übertragung großer Drehmomente ist es vorteilhaft, wenn das zweite Übertragungselement zwei Scheibenteile umfasst, welche in ihrem radial inneren Bereich in axialer Richtung beidseits des ersten Übertragungselements liegen. Auf diese Art und Weise kann ein sehr massives zweites Übertragungselement erhalten werden, das gleichwohl jedoch fertigungstechnisch noch beherrschbar ist.

Um für den im Allgemeinen zwischen dem ersten Übertragungselement und dem zweiten Übertragungselement wirkenden bzw. dort gebildeten Vorlastdämpfer einen maximalen Wirkungswinkel vorgeben zu können, wird vorgeschlagen, dass das zweite Übertragungselement eine zweite Innenverzahnungsformation aufweist, welche mit einer Außenverzahnungsformation des Nabenelements in eine vorbestimmte Relativdrehung zwischen dem zweiten Übertragungselement und dem Nabenelement zulassendem Kämmeingriff steht.

Auch für die Abstützung zwischen dem zweiten Übertragungselement und dem dritten Übertragungselement kann vorgesehen sein, dass die zweite Abstützanordnung eine zwischen dem zweiten Übertragungselement und dem dritten Übertragungselement wirkende zweite Vorspannanordnung umfasst. Die zweite Vorspannanordnung kann ein bezüglich des zweiten Übertragungselements und des dritten Übertragungselements sich abstützendes Federelement umfassen. Um auch in diesem Bereich definierte Reibverhältnisse bzw. definierte Abstützverhältnisse bereitstellen zu können, wird vorgeschlagen, dass das Federelement bezüglich des zweiten Übertragungselements oder/und bezüglich des dritten Übertragungselements über einen Abstützring abgestützt ist.

Das dritte Übertragungselement kann zwei Scheibenteile umfassen, die an beiden axialen Seiten des zweiten Übertragungselements angeordnet sind. Bei dieser Ausgestaltungsform ist es dann weiterhin möglich, dass die zweite Vorspannanordnung zwischen dem zweiten Übertragungselement und einem der Scheibenteile des dritten Übertragungselements angeordnet ist und dass zwischen dem zweiten Übertragungselement und dem anderen der Scheibenteile des dritten Übertragungselements ein Abstützring angeordnet ist.

Allgemein ist es also auch im Bereich der Abstützung zwischen dem zweiten Übertragungselement und dem dritten Übertragungselement möglich, dass die zweite Abstützanordnung wenigstens einen Teil einer zwischen dem zweiten Übertragungselement und dem dritten Übertragungselement wirkenden Reibeinrichtung bildet.

Um den Ausgleich von Achsversätzen weiter zu erleichtern, wird vorgeschlagen, dass an dem Nabenelement eine Abstützfläche mit sich in axialer Richtung verjüngender Kontur ausgebildet ist, an welcher ein Abstützelement der ersten Abstützanordnung in axialer Richtung und in radialer Richtung abgestützt ist, wobei dann weiterhin vorgesehen sein kann, dass das Abstützelement eine zur Abstützfläche des Nabenelements komplementär geformte Abstützfläche aufweist. Die Abstützfläche des Nabenelements kann sich konisch verjüngend ausgebildet sein oder kann sich kugelkalottenartig verjüngend ausgebildet sein. Allgemein ist also jede sich verjüngende Kontur hier einsetzbar, die eine gewisse Verkippbarkeit der so aneinander abgestützten Elemente zulässt.

Der erfindungsgemäße Torsionsschwingungsdämpfer kann weiter so ausgebildet sein, dass das Abstützelement zwischen dem Nabenelement und dem anderen der Scheibenteile des dritten Übertragungselements angeordnet ist.

Allgemein kann vorgesehen sein, dass die erste Abstützanordnung wenigstens einen Teil einer zwischen dem dritten Übertragungselement und dem Nabenelement wirkenden Reibeinrichtung bildet.

Die vorliegende Erfindung betrifft ferner eine Kupplungsscheibe mit einem erfindungsgemäßen Torsionsschwingungsdämpfer.

Nachfolgend wird die Erfindung mit Bezug auf die beiliegenden Zeichnungen detailliert beschrieben. Es zeigt:
- Fig. 1: eine Teil-Längsschnittansicht einer mit einem erfindungsgemäßen Torsionsschwingungsdämpfer ausgebildeten Kupplungsscheibe;
- Fig. 2: eine abgewandelte Ausgestaltungsform der in Fig. 1 dargestellten Kupplungsscheibe.

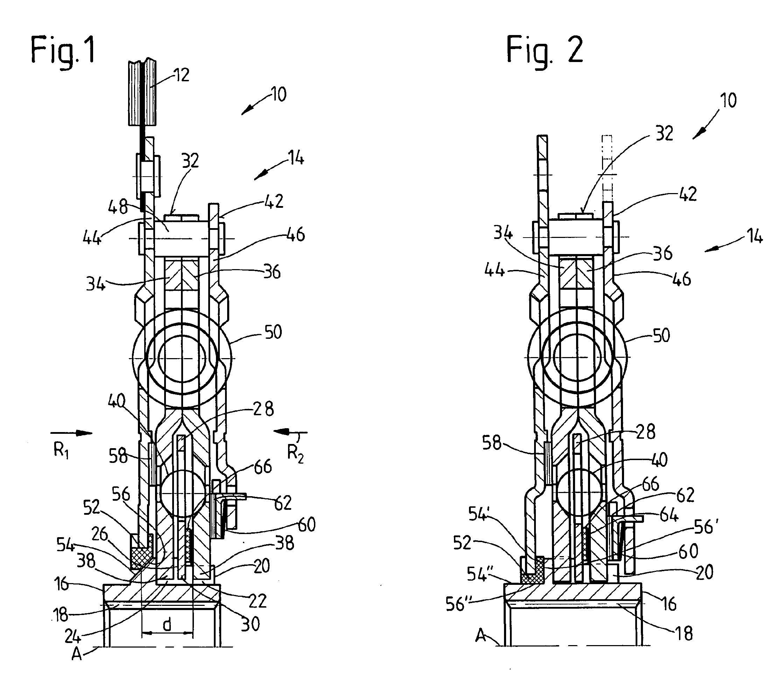

In Fig. 1 ist eine Kupplungsscheibe für eine Reibunsgkupplung allgemein mit 10 bezeichnet. Diese Kupplungsscheibe umfasst Reibbeläge 12, die über einen nachfolgend noch detailliert beschriebenen Torsionsschwingungsdämpfer 14 an eine nicht dargestellte Getriebeeingangswelle oder dergleichen angekoppelt werden können.

Der Torsionsschwingungsdämpfer 14 umfasst ein ringartig ausgebildetes Nabenelement 16, das an seiner Innenseite eine Verzahnung 18 zur drehfesten Ankopplung an die Getriebeeingangswelle aufweist. An seiner Außenseite weist das Nabenelement 16 eine Außenverzahnung 20 auf. Die Außenverzahnung 20 weist zwei axial aufeinander folgende Abschnitte 22, 24 auf, die in einem stufenartigen Übergangsbereich 26 ineinander übergehen. Man erkennt, dass der Axialabschnitt 22 eine geringere Radialerstreckung aufweist, als der Axialabschnitt 24. Ein scheibenartig ausgebildetes erstes Übertragungselement 28 weist eine Innenverzahnung 30 auf, die mit der Außenverzahnung 20 des Nabenelements 16 in Kämmeingriff steht. Die Innenverzahnung 30 und die Außenverzahnung 20 sind so aufeinander abgestimmt, dass unter Berücksichtigung der im Allgemeinen nicht vermeidbaren und zum axialen Aufschieben des scheibenartigen Übertragungselements 28 erforderlichen Toleranzen ansonsten ein möglichst geringes Drehbewegungsspiel zwischen diesen beiden Bauteilen 28 und 16 vorhanden ist. An der in der Fig. 1 linken Seite des Übertragungselements 28 liegt dieses am stufenartigen Übergang 26 der Außenverzahnung 20 an, so dass nicht nur eine drehfeste Kopplung zwischen dem Übertragungselement 28 und dem Nabenelement 16 hergestellt ist, sondern auch eine axial feste Kopplung in einer axialen Richtung R₂. D.h., da erste Übertragungselement 28 kann sich in dieser Richtung R₂ nicht bezüglich des Nabenelements 16 verschieben.

Ein zweites scheibenartiges Übertragungselement 32 weist zwei Scheibenteile 34, 36 auf. Diese beiden Scheibenteile 34, 36 liegen in ihrem radial äußeren Bereich aneinander an und können bei Bedarf bzw. Notwendigkeit auch beispielsweise durch Vernietung, Verschweißung oder dergleichen fest miteinander verbunden sein. Radial innen weisen diese Scheibenteile 34, 36 einen gegenseitigen axialen Abstand auf und liegen so beidseits des ersten Übertragungselements 28. Auch dieses zweite scheibenartige Übertragungselement weist im Bereich der radial inneren Enden der Scheibenteile 34, 36 eine Innmenverzahnung 38 auf, welche mit der Außenverzahnung 20 des Nabenelements 16 in Kämmeingriff steht, und zwar derart, dass eine Umfangsbewegung des zweiten Übertragungselements in begrenztem Drehwinkelbereich bezüglich des Nabenelements 16 möglich ist.

Das erste Übertragungselement 28 und die beiden Scheibenteile 34, 36 des zweiten Übertragungselements 32 weisen jeweilige Federfenster auf, in welche Dämpferfedern 40 eingesetzt sind. Die Dämpferfedern 40, welche als im Wesentlichen in Umfangsrichtung orientierte Schraubendruckfedern ausgebildet sein können, ermöglichen eine Relativbewegung zwischen den beiden Übertragungselementen 28, 32 in dem durch den Kämmeingriff der Verzahnungen 38, 20 vorgegebenen Drehwinkelbereich unter Kompression derselben.

Ein drittes scheibenartiges Übertragungselement 42 weist ebenfalls zwei Scheibenteile 44, 46 auf. Diese beiden Scheibenteile 44, 46 sind durch Nietbolzen 48 miteinander fest verbunden und sind so positioniert, dass sie jeweils an der Außenseite der Scheibenteile 34, 36 des zweiten Übertragungselements 32 liegen. Die beiden Scheibenteile 34, 36 greifen nach radial außen zwischen mindestens zwei in Umfangsrichtung aufeinander folgende Nietbolzen 48 ein und bilden somit eine Drehwinkelbegrenzung für die ansonsten in Umfangsrichtung bezüglich einander bewegbaren Übertragungselemente 32, 42. Dämpferfedern 50 sind in jeweiligen Federfenstern der Scheibenteile 34, 36 bzw. 44, 46 angeordnet, so dass die Drehbewegung zwischen dem zweiten Übertragungselement 32 und dem dritten Übertragungselement 42 unter Kompression der Dämpferfedern 50 erfolgen kann.

Man erkennt aus der vorangehenden Beschreibung, dass der Torsionsschwingungsdämpfer 40 zweistufig ausgebildet ist, und eine erste Dämpferstufe ist im Wesentlichen durch das erste Übertragungselement 28, die Dämpferfedern 40 und das zweite Übertragungselement 32 gebildet, und die zweite Dämpferstufe ist im Wesentlichen durch das zweite Übertragungselement 32, die Dämpferfedern 50 und das dritte Übertragungselement 42 gebildet. Allein auf Grund der Radialstaffelung der Dämpferfedern 40, 50 ist vorzugsweise vorgesehen, dass die erste und radial innen liegende Dämpferstufe ein Vordämpfer für geringere Drehmomente ist, während die zweite und radial außen liegende Dämpferstufe der Dämpfung im Hauptlastbereich dient.

Das Scheibenteil 44 des dritten Übertragungselements 42 ist in seinem radial inneren Bereich über ein damit drehfest gekoppeltes, ringartig ausgestaltetes Abstützelement 52 in einer Richtung R₁ am Nabenelement 16 abgestützt. Man erkennt, dass hierzu das Nabenelement 16 eine sich konisch verjüngende Abstützfläche 54 aufweist, an welcher das Abstützelement 52 mit einer komplementär geformten Abstützfläche 56 abgestützt ist. Somit ist durch diese Abstützwechselwirkung das dritte Übertragungselement 42 in der axialen Richtung R₁ bezüglich des Nabenelements 16 abgestützt. Weiterhin ist das Scheibenteil 44 des dritten Übertragungselements 42 durch einen Abstützring 58 bezüglich des Scheibenteils 34 des zweiten Übertragungselements 32 in der axialen Richtung R₁ abgestützt. Das Scheibenteil 46 des dritten Übertragungselements 42 ist über eine Vorspannfeder 60 und einen Abstützring 62, der mit diesem Scheibenelement zur gemeinsamen Drehung, ggf. mit bestimmtem Drehbewegungsspiel, gekoppelt ist, an dem Scheibenteil 36 des zweiten Übertragungselements 32 in der axialen Richtung R₂ abgestützt. Durch die Vorspannwirkung des beispielsweise als Tellerfeder oder Wellfeder ausgestalteten Federelements 60 ist somit eine definierte Positionierung des zweiten Übertragungselements 32 bezüglich des dritten Übertragungselements 42 in der Achsrichtung vorgesehen.

Es sei hier darauf hingewiesen, dass die Abstützringe 58, 62 in Zusammenwirkung mit der Vorspannfeder 60 eine Trockenreibeinrichtung, ggf. mit teilweise verschleppt wirkender Charakteristik, für den Hauptlastdämpferbereich bilden, also nicht nur der Axialabstützung dienen. Hier können beispielsweise die Abstützringe 58, 62 mehrteilig ausgebildet sein, um in demjenigen Bereich, in dem sie reibend wirksam werden, eine bestimmte Reibcharakteristik bereitstellen zu können. Ferner sei darauf hingewiesen, dass auch das ringartige Abstützelement 52, das bei wirksamer Hauptlastdämpferstufe reibend an dem Nabenelement 16 abgleitet, einen Bereich einer Reibeinrichtung bereitstellt, die sowohl dann wirksam ist, wenn die Hauptlastdämpferstufe zur Schwingungsdämpfung beiträgt, als auch dann, wenn die Vorlastdämpferstufe zur Schwingungsdämpfung beiträgt, da in jedem dieser Fälle das Nabenelement 16 sich bezüglich des dritten Übertragungselements 42 verdrehen wird.

Zwischen dem scheibenartigen ersten Übertragungselement 28 und dem Scheibenteil 36 des zweiten Übertragungselements 32, das an der vom stufenartigen Übergang 26 der Außenverzahnung 20 abgewandten Seite des ersten Übertragungselements 28 liegt, ist eine beispielsweise ebenfalls als Tellerfeder oder Wellfeder oder dergleichen ausgebildete Feder 64 vorgesehen, die sich im dargestellten Beispiel an dem Scheibenteil 36 und einem am Übertragungselement 28 anliegenden Abstützring 66 abstützt. Diese die beiden Teile 64 und 66 umfassende Abstützanordnung sorgt dafür, dass, bedingt durch die axiale Abstützung des ersten Übertragungselements 28 am stufenartigen Übergang 26, das zweite Übertragungselement 30 in der Darstellung der Fig. 1 nach rechts, also der axialen Richtung R₁ vorgespannt wird. Da in dieser Richtung jedoch das zweite Übertragungselement 32 über den Abstützring 62 und die Feder 60 am dritten Abstützelement 42 abgestützt ist, wird durch die Vorspannwirkung der Feder 64 auch das dritte Übertragungselement 42 mit seinem radial innen am Scheibenteil 44 vorgesehenen ringartigen Abstützelement 52 in Anlage an der Abstützfläche 54 des Nabenelements 16 gehalten.

Durch die Vorspannfeder 64 und den Abstützring 66 ist neben dieser Abstützwirkung auch eine Reibwirkung vorgesehen, die zwischen dem ersten Übertragungselement 28 und dem zweiten Übertragungselement 32 dann wirksam ist, wenn der Vorlastdämpfer mit seinen Dämpferfedern 40 zur Torsionsschwingungsdämpfung beiträgt und somit die beiden Übertragungselemente 28, 32 sich bezüglich einander verdrehen.

Aus der vorangehenden Beschreibung erkennt man, dass die Axialabstützung des Nabenelements 16 in den beiden axialen Richtungen R₁ und R₂ einerseits am Anlagekontakt zu dem ringartigen Abstützelement 52 und andererseits am Anlagekontakt des Federelements 64 zum Scheibenteil 36 erfolgt. Es liegt somit ein vergleichsweise kleiner Abstützabstand d vor.

Dieser ermöglicht jedoch wieder ein vergleichsweise leichtes Verkippen des Nabenelements 16 bezüglich des dritten Übertragungselements 42 und somit das leichte Kompensieren von Achsversätzen zwischen einer Antriebswelle, also beispielsweise Kurbelwelle und einer Abtriebswelle, also beispielsweise Getriebeeingangswelle. Hierfür ist es jedoch auch erforderlich, dass die Innenverzahnung 38 am zweiten Übertragungselement 32 neben dem vorgesehenen Umfangsbewegungsspiel zur Außenverzahnung 20 auch noch ein gewisses Radialbewegungsspiel aufweist, das das Verkippen des zweiten Übertragungelements 32 zusammen mit dem dritten Übertragungselement 42 bezüglich des Nabenelements 16 zulässt. Ein weiterer Vorteil des erfindungsgemäßen Torsionsschwingungsdämpfers ist, dass durch die Vorspannwirkung des Federelements 64 und auch die Vorspannwirkung des Federelements 60 das erste Übertragungselement 28 in festem axialen Anlagekontakt am stufenartigen Übergang 26 gehalten wird. Daraus folgt, dass selbst dann, wenn bei Lastwechselzuständen im Bereich des zwangsweise vorhandenen geringen Bewegungsspiels zwischen der Innenverzahnung 30 und der Außenverzahnung 20 das erste Übertragungselement 28 sich geringfügig bezüglich des Nabenelements 16 verdrehen wird, diese Verdrehung gegen eine Reibwirkung ablaufen muss, nämlich zumindest die zwischen dem Übertragungselement 28 und dem stufenartigen Übergang 26 vorhandene Reibwirkung. D.h., dass hier eine Bewegungsdämpfung stattfinden wird, die verhindert, dass die Verzahnungsabschnitte der Außenverzahnung 20 und der Innenverzahnung 30 bei jedem Lastwechsel massiv gegeneinander schlagen und somit sich mit der Zeit ineinander eingraben. Es kann auf diese Art und Weise verhindert werden, dass durch das zunehmende Eingraben der Wirkungsbereich des Vordämpfers abnimmt.

Ein weiterer auch alleine betrachtet besonders vorteilhafter Aspekt des erfindungsgemäßen Torsionsschwingungsdämpfers 14 ist, dass das dritte Übertragungselement 42 nur an einer axialen Seite, nämlich im Bereich des Scheibenteils 44 desselben, an dem Nabenelement 16 abgestützt ist. Das andere Scheibenteil 46 braucht nicht so weit nach radial innen geführt zu werden, so dass hier im radial inneren Bereich Bauraum frei wird, der für andere Komponenten einer Reibungskupplung genutzt werden kann.

Eine abgewandelte Ausgestaltungsform einer Kupplungsscheibe ist in Fig. 2 gezeigt. Komponenten, welche vorangehend beschriebenen Komponenten hinsichtlich Aufbau bzw. Funktion entsprechen, sind mit dem gleichen Bezugszeichen bezeichnet. Im Folgenden wird nur auf die wesentlichen konstruktiven Unterschiede eingegangen.

Man erkennt, dass das ringartige Abstützelement 52, über welches das dritte Übertragungselement 42 in der axialen Richtung R₁ am Nabenelement 16 abgestützt ist, einen quadratischen bzw. rechteckigen Querschnitt aufweist und somit mit einer Axialabstützfläche 56' an einer entsprechenden Axialabstützfläche 54' des Nabenelements 16 abgestützt ist, während es mit einer Innenumfangsfläche 56" an einer Außenumfangsfläche 54" des Nabenelements 1 6 abgestützt ist. Gleichwohl ist auch bei dieser Ausgestaltungform eine bestimmte Taumelfähigkeit des dritten Übertragungselements bezüglich des Nabenelements 16 dadurch gegeben, dass das Scheibenteil 44 dieses dritten Übertragungselements 42 bezüglich des ringartigen Übertragungselements 52 verkippen kann.

Weiter erkennt man, dass bei dieser Ausgestaltungsform das Scheibenteil 46 des dritten Übertragungselements 42 genauso weit nach radial innen gezogen ist, wie das andere Scheibenteil 44 dieses dritten Übertragungselements 42. Es ist somit ein im Wesentlichen symmetrischer Aufbau vorhanden, bei dem insbesondere für die beiden Scheibenteile 44, 46 grundsätzlich das gleiche Bauteil eingesetzt werden kann. Dieses Bauteil ist in seinem Außenbereich in Umfangsrichtung links vom Nietbolzen 48, bezogen auf rechts vom Nietbolzen 48, vorzugsweise asymmetrisch ausgebildet, damit beim spiegelverkehrten Verbau dieses gleichen Bauteils die Nietstellen für die Anbindung z.B. des Belagträgerelements frei zugängig werden.

Es wird darauf hingewiesen, dass selbstverständlich bei den vorangehend beschriebenen Kupplungsscheiben in verschiedensten Bereichen im Umfang der Prinzipien der vorliegenden Erfindung Änderungen vorgenommen werden können. So können selbstverständlich die eine Verkippung ermöglichenden Abstützflächen 54, 56 mit balliger, d.h. konvexer bzw. konkaver Kontur, ausgestaltet sein. Die in den Darstellungen durch die Dämpferfedern 40 bzw. 50 repräsentierten Dämpferelementenanordnungen der verschiedenen Dämpferstufen können selbstverständlich auch jeweils mehrere gestuft wirksam werdende Federn, ggf. ineinander geschachtelt, umfassen.

## Patentansprüche

1. Torsionsschwingungsdämpfer, umfassend:
- ein Nabenelement (16),
- ein mit dem Nabenelement (16) drehfestes erstes Übertragungselement (28),
- ein zweites Übertragungselement (32), das mit dem ersten Übertragungselement (16) über eine erste Dämpferelementenanordnung (40) gekoppelt ist,
- ein drittes Übertragungselement (42), das mit dem zweiten Übertragungselement (32) über eine zweite Dämpferelementenanordnung (50) gekoppelt ist,
- eine erste Abstützanordnung (52), über welche das dritte Übertragungselement (42) bezüglich des Nabenelements (16) in einer ersten axialen Richtung (R₁) abgestützt ist,
- eine zweite Abstützanordnung (58, 60, 62), über welche das dritte Übertragungselement (42) bezüglich des zweiten Übertragungselements (32) zumindest in einer der ersten axialen Richtung (R₁) entgegengesetzten zweiten axialen Richtung (R₂) abgestützt ist,
**dadurch gekennzeichnet, dass** das erste Übertragungselement (28) bezüglich des Nabenelements (16) zumindest in der zweiten axialen Richtung (R₂) axial abgestützt ist und dass das zweite Übertragungselement (32) durch eine dritte Abstützanordnung (64, 66) bezüglich des ersten Übertragungselements (28) zumindest in der zweiten axialen Richtung (R₂) abgestützt ist.

2. Torsionsschwingunsdämpfer nach Anspruch 1,
**dadurch gekennzeichnet, dass** das Nabenelement (16) eine Außenverzahnungsformation (20) aufweist, dass das erste Übertragungselement (28) eine erste Innenverzahnungsformation (30) aufweist und dass die Außenverzahnungsformation (20) und die Innenverzahnungsformation (30) im Wesentlichen drehfest in Kämmeingriff stehen.

3. Torsionsschwingungsdämpfer nach Anspruch 1 oder 2,
**dadurch gekennzeichnet, dass** an dem Nabenelement (16) ein das erste Übertragungselement (28) gegen Bewegung in der zweiten axialen Richtung (R₂) blockierender Anschlag (26) vorgesehen ist.

4. Torsionsschwingungsdämpfer nach Anspruch 2 und Anspruch 3,
**dadurch gekennzeichnet, dass** der Anschlag (26) durch einen Radialübergang der Außenverzahnungsformation (20) gebildet ist.

5. Torsionsschwingungsdämpferanordnung nach einem der Ansprüche 1 bis 4,
**dadurch gekennzeichnet, dass** die dritte Abstützanordnung (64, 66) eine zwischen dem ersten Übertragungselement (28) und dem zweiten Übertragungselement (32) wirkende erste Vorspannanordnung (64) umfasst.

6. Torsionsschwingungsdämpferanordnung nach Anspruch 5,
**dadurch gekennzeichnet, dass** die erste Vorspannanordnung (64) ein bezüglich des ersten Übertragungselements (28) und des zweiten Übertragungselements (32) sich abstützendes Federelement (64) umfasst.

7. Torsionsschwingungsdämpfer nach Anspruch 6,
**dadurch gekennzeichnet, dass** das Federelement (64) bezüglich des ersten Übertragungselements (28) oder/und bezüglich des zweiten Übertragungselements (32) über einen Abstützring (66) abgestützt ist.

8. Torsionsschwingungsdämpfer nach einem der Ansprüche 1 bis 7,
**dadurch gekennzeichnet, dass** die dritte Abstützanordnung (64, 66) wenigstens einen Teil einer zwischen dem ersten Übertragungselement (28) und dem zweiten Übertragungselement (32) wirkenden Reibeinrichtung bildet.

9. Torsionsschwingungsdämpfer nach einem der Ansprüche 1 bis 8,
**dadurch gekennzeichnet, dass** das zweite Übertragungselement (32) zwei Scheibenteile (34, 36) umfasst, welche in ihrem radial inneren Bereich in axialer Richtung beidseits des ersten Übertragungselements (28) liegen.

10. Torsionsschwingungsdämpfer nach einem der Ansprüche 1 bis 9,
**dadurch gekennzeichnet, dass** das zweite Übertragungselement (32) eine zweite Innenverzahnungsformation (38) aufweist, welche mit einer Außenverzahnungsformation (20) des Nabenelements (16) in eine vorbestimmte Relativdrehung zwischen dem zweiten Übertragungselement (32) und dem Nabenelement (16) zulassendem Kämmeingriff steht.

11. Torsionsschwingungsdämpfer nach einem der Ansprüche 1 bis 10,
**dadurch gekennzeichnet, dass** die zweite Abstützanordnung (58, 60, 62) eine zwischen dem zweiten Übertragungselement (32) und dem dritten Übertragungselement (42) wirkende zweite Vorspannanordnung (60) umfasst.

12. Torsionsschwingungsdämpfer nach Anspruch 11,
**dadurch gekennzeichnet, dass** die zweite Vorspannanordnung (60) ein bezüglich des zweiten Übertragungselements (32) und bezüglich des dritten Übertragungselements (42) sich abstützendes Federelement (60) umfasst.

13. Torsionsschwingungsdämpfer nach Anspruch 12,
**dadurch gekennzeichnet, dass** das Federelement (60) bezüglich des zweiten Übertragungselements (32) oder/und bezüglich des dritten Übertragungselements (42) über einen Abstützring (62) abgestützt ist.

14. Torsionsschwingungsdämpfer nach einem der Ansprüche 1 bis 13.
**dadurch gekennzeichnet, dass** das dritte Übertragungselement (42) zwei Scheibenteile (44, 46) umfasst, die an beiden axialen Seiten des zweiten Übertragungselements (32) angeordnet sind.

15. Torsionsschwingungsdämpfer nach Anspruch 14 und einem der Ansprüche 11 bis 13,
**dadurch gekennzeichnet, dass** die zweite Vorspannanordnung (60) zwischen dem zweiten Übertragungselement (32) und einem (46) der Scheibenteile (44, 46) des dritten Übertragungselements (42) angeordnet ist und dass zwischen dem zweiten Übertragungselement (32) und dem anderen (44) der Scheibenteile (44, 46) des dritten Übertragungselements (42) ein Abstützring (58) angeordnet ist.

16. Torsionsschwingungsdämpfer nach einem der Ansprüche 1 bis 15,
**dadurch gekennzeichnet, dass** die zweite Abstützanordnung (58, 60, 62) wenigstens einen Teil einer zwischen dem zweiten Übertragungselement (32) und dem dritten Übertragungselement (42) wirkenden Reibeinrichtung bildet.

17. Torsionsschwingungsdämpfer nach einem der Ansprüche 1 bis 16,
**dadurch gekennzeichnet, dass** an dem Nabenelement (16) eine Abstützfläche (54) mit sich in axialer Richtung verjüngender Kontur ausgebildet ist, an welcher ein Abstützelement (52) der ersten Abstützanordnung (52) in axialer Richtung und in radialer Richtung abgestützt ist.

18. Torsionsschwingungsdämpfer nach Anspruch 17,
**dadurch gekennzeichnet, dass** das Abstützelement (52) eine zur Abstützfläche (54) des Nabenelements (16) komplementär geformte Abstützfläche (56) aufweist.

19. Torsionsschwingungsdämpfer nach Anspruch 17 oder 18,
**dadurch gekennzeichnet, dass** die Abstützfläche (54) des Nabenelements (16) sich konisch verjüngend oder sich kugelkalottenartig verjüngend ausgebildet ist.

20. Torsionsschwingungsdämpfer nach Anspruch 15 und einem der Ansprüche 17 bis 19,
**dadurch gekennzeichnet, dass** das Abstützelement (52) zwischen dem Nabenelement (16) und dem anderen (44) der Scheibenteile (44, 46) des dritten Übertragungselements (42) angeordnet ist.

21. Torsionsschwingungsdämpfer nach einem der Ansprüche 1 bis 20,
**dadurch gekennzeichnet, dass** die erste Abstützanordnung (52) wenigstens einen Teil einer zwischen dem dritten Übertragungselement (42) und dem Nabenelement (16) wirkenden Reibeinrichtung bildet.

22. Kupplungsscheibe, umfassend einen Torsionsschwingungsdämpfer (14) nach einem der vorangehenden Ansprüche.
